Europäisches Patentamt

European Patent Office

Office européen des brevets

(19)

(11) **EP 0 506 517 B1**

(12) **FASCICULE DE BREVET EUROPEEN**

(45) Date de publication et mention
de la délivrance du brevet:
**03.01.1996 Bulletin 1996/01**

(51) Int Cl.6: **G01S 17/02**, G02B 5/122

(21) Numéro de dépôt: **92400716.4**

(22) Date de dépôt: **18.03.1992**

(54) **Dispositif de télémétrie laser à grande distance**

Laser-Telemetriervorrichtung für grosse Entfernungen

Long range laser telemetry device

(84) Etats contractants désignés:
**CH DE ES FR GB IT LI NL**

(30) Priorité: **28.03.1991 FR 9103795**

(43) Date de publication de la demande:
**30.09.1992 Bulletin 1992/40**

(73) Titulaire:
**AEROSPATIALE Société Nationale Industrielle
F-75781 Paris Cédex 16 (FR)**

(72) Inventeurs:
• **Lund, Glenn
F-06440 Peillon (FR)**
• **Renault, Hervé
F-06400 Cannes (FR)**

(74) Mandataire: **Santarelli, Marc
F-75017 Paris (FR)**

(56) Documents cités:
**US-A- 3 833 285**

• **LA RECHERCHE SPATIALE vol. 10, no. 5,
Septembre 1971, PARIS F pages 15 - 18; A.
ORSZAG: 'Télémétrie laser Terre-Lune'**

## Description

L'invention concerne la télémétrie laser à grande distance (en anglais "long range laser ranging"), c'est-à-dire la mesure précise de l'écartement de deux points très éloignés l'un de l'autre. Pour ce faire, il est connu de disposer un ensemble émetteur-récepteur laser en l'un de ces points et une cible rétroréflectrice en l'autre point : la mesure de distance est déduite du temps nécessaire à une impulsion laser pour se déplacer dans un sens puis dans l'autre, entre l'émetteur-récepteur et la cible.

A titre d'exemple il peut s'agir de mesurer des distances de plusieurs centaines (voire milliers) de kilomètres avec une précision de l'ordre de quelques centimètres. Il peut s'agir notamment de mesurer la distance entre un point de la Terre et un objet situé dans l'espace (véhicule spatial ou satellite naturel (Lune) ou artificiel en orbite autour de la Terre), voire plus généralement entre deux corps spatiaux, notamment véhicule spatial autour d'une autre planète, .... En cumulant de telles mesures et en utilisant plusieurs cibles, on peut par exemple déterminer ensuite avec précision, par des techniques de triangulation ou analogues, les distances entre divers points du globe terrestre. Le principe de la télémétrie Terre-Lune est ainsi décrit, notamment, dans un article de La Recherche Spatiale, vol. 10, n° 5, Septembre 1971, pp 15-18.

La cible rétroréflectrice comporte en pratique un ou plusieurs rétroréflecteurs qui, de préférence, sont formés de trois facettes planes réfléchissantes contiguës et orthogonales entre elles, raccordées en un "coin de cube", et la diagonale du cube fictif auquel appartient ce coin de cube constitue un axe de référence appelé normale du rétroréflecteur. Une telle cible rétroréflectrice a pour propriété de renvoyer les rayons incidents parallèlement à eux-mêmes. Ainsi le renvoi vers l'émetteur du rayon laser, même sur de très grandes distances, n'impose pas le pointage de l'axe du coin de cube vers l'émetteur, dès lors que l'impulsion laser pénètre dans ce coin de cube, et bien sûr que l'orthogonalité des surfaces réfléchissantes soit aussi parfaite que possible.

En fait, l'impulsion renvoyée par le coin de cube parfait présente un seul lobe de diffraction avec un pic d'énergie dans la direction de renvoi et dont la largeur équivalente est donnée en première approximation par la relation $\lambda/d$ où $\underline{\lambda}$ est la longueur d'onde de l'impulsion incidente et $\underline{d}$ la dimension transversale moyenne de la cible (appelée par abus de langage : diamètre). C'est ainsi que pour une longueur d'onde de 0,5 μm (couleur verte) et une cible de diamètre de 10 cm, la largeur du lobe (en l'absence d'un milieu perturbateur) est de l'ordre d'une seconde d'arc (cette largeur est en fait un angle sous lequel un observateur situé à l'emplacement de la cible verrait cette impulsion renvoyée).

Dès lors que l'angle sous lequel la cible voit l'écartement entre l'émetteur (au moment où l'impulsion incidente est émise) et le récepteur (au moment où l'impulsion réfléchie lui parvient) est inférieur à la largeur du lobe, le principe de télémétrie indiqué ci-dessus peut être mis valablement en oeuvre.

Par contre, le rendement énergie reçue/énergie émise de l'ensemble émetteur/récepteur se dégrade dès lors qu'il y a une vitesse relative importante entre cet ensemble émetteur/récepteur et la cible rétroréflectrice, transversalement à la direction qui les relie ; en fait il est connu dans ce cas de définir un angle d'aberration de vitesse, qui dépend du rapport entre la vitesse relative transverse et la vitesse du faisceau laser (donc la vitesse de la lumière). Lorsque cet angle d'aberration de vitesse devient supérieur à la largeur du lobe, cela veut dire que le récepteur se trouve à l'écart transversalement du lobe de diffraction de l'impulsion en retour, lorsque celle-ci parvient à l'emplacement qu'occupait l'ensemble émetteur/récepteur lors de l'émission de cette impulsion.

Pour compenser cette aberration de vitesse, il a déjà été proposé de modifier de quelques secondes d'arc les angles droits entre les trois facettes réfléchissantes de la cible, en sorte d'élargir le faisceau en retour. Mais en pratique, lorsque l'on augmente cet angle de modification à partir de zéro, le lobe de diffraction, initialement unique dans un graphique à trois dimensions corrélant la densité d'énergie émise par la cible dans une direction et deux angles d'inclinaison caractérisant l'orientation dans l'espace de cette direction par rapport à la direction de l'impulsion incidente, s'élargit en présentant en son centre un creux entouré d'une couronne irrégulière ; en fait, cette couronne est formée de six pics disposés en cercle et s'interpénétrant les uns les autres.

On obtient ainsi, au sein d'un rétroréflecteur donné, une correction "omnidirectionnelle" de l'aberration de vitesse, mais celle-ci devient insuffisante lorsque cette dernière correction est sensiblement supérieure à la largeur moyenne des six lobes individuels car une nouvelle augmentation des angles de modification se traduit par une dissociation de la couronne précitée en six lobes distincts : l'effet de compensation devient aléatoire selon que, du fait de la vitesse relative transverse, le récepteur vient intercepter ou non l'un de ces six lobes ; en outre lorsque le récepteur vient par chance intercepter l'un de ces six lobes, l'énergie lumineuse est faible puisque ne représentant au plus qu'un sixième de l'énergie globale.

On a alors proposé de disposer sur la cible de multiples petits rétroréflecteurs orientés de façon aléatoire autour de leurs normales de manière à générer en retour une impulsion globale formée d'une pluralité d'impulsions élémentaires dont les jeux de six lobes se complèteraient les uns les autres pour former conjointement un lobe en anneau. Toutefois l'existence de plusieurs rétroréflecteurs participant à la formation de ce lobe global nuit à la précision des mesures, compte tenu notamment des différences de position de ces rétroréflecteurs sur la cible, qui induisent notamment un échelonnement dans le temps des impulsions parvenant au récepteur, et de la petite taille de ces rétroréflecteurs qui limite à un faible niveau l'énergie individuelle des impulsions en retour.

L'invention a pour objet de pallier ces inconvénients, et de permettre, même pour des vitesses relatives transverses importantes, d'assurer une correction efficace de l'aberration de vitesse et à obtenir des mesures de grande précision, tout en restant à un niveau élevé de rendement énergie lumineuse reçue/énergie émise.

Elle accepte pour cela de renoncer au principe de symétrie respecté jusque là dans le domaine de la télémétrie laser, où peu importait l'orientation des coins de cube autour de leurs normales, et où les mêmes exigences s'appliquaient aux trois arêtes.

L'invention enseigne pour cela de générer l'impulsion en retour dans un très petit nombre de rétroréflecteurs, conçus et disposés en sorte que l'énergie renvoyée soit dissociée, non plus en six lobes, mais en deux seulement, alignés parallèlement à la vitesse relative transverse.

Plus précisément l'invention propose un dispositif de télémétrie laser à grande distance comportant un ensemble émetteur/récepteur adapté à émettre et recevoir une impulsion laser et une cible rétroréflectrice adaptée à recevoir cette impulsion laser et la renvoyer parallèlement à elle-même, cet ensemble émetteur/récepteur décrivant par rapport à la cible une trajectoire relative en des points de laquelle cet ensemble a une vitesse relative globale V et, perpendiculairement à une ligne instantanée le reliant à la cible, une vitesse relative transverse $v_t$ qui est en moyenne de l'ordre au moins du km/sec, caractérisé en ce que cette cible comporte au moins un rétroréflecteur en forme de coin de cube dont le champ de vue intercepte ladite trajectoire en au moins un tronçon et qui comporte trois facettes planes réfléchissantes déterminant trois arêtes convergentes en un sommet, dont deux facettes sont orthogonales à la troisième tout en formant entre elles un angle différant de 90° d'une valeur d'écart $\varepsilon$ au moins égale à une seconde d'arc, ces dites facettes convergeant en une arête, dite "arête corrigée" et contenue dans un plan passant par l'axe du coin de cube et au moins approximativement perpendiculaire à l'orientation moyenne de la vitesse relative transverse en ce ou ces tronçons de trajectoire, l'écart $\varepsilon$ étant compris entre les valeurs minimale et maximale de la grandeur $v_t/(c.\sin\Theta)$, en radians, sur le (ou les) tronçon(s) de trajectoire interceptés par ledit champ de vue du rétroréflecteur, où $v_t$ et $\Theta$ sont respectivement, pour un point quelconque de ce ou ces tronçon(s), la vitesse relative transverse et l'angle entre la ligne reliant ce point à la cible et ladite arête corrigée, et où $c$ est la vitesse de la lumière.

En d'autres termes, lorsque la trajectoire relative entre l'émetteur-récepteur et la cible est de nature orbitale (c'est-à-dire que l'émetteur-récepteur (réciproquement la cible) décrit une orbite par rapport au corps céleste - une planète telle que la Terre ou la Lune - portant la cible (réciproquement l'émetteur-récepteur)), le plan P est au moins approximativement perpendiculaire aux plans des tronçons de trajectoire orbitale interceptés par le champ de vue du coin de cube.

Aux vitesses transverses connues à ce jour, correspondent le plus souvent des écarts d'angle compris entre 1" d'arc et 10" d'arc environ.

Dans une version préférée, la cible comporte une pluralité de tels rétroréflecteurs, conçus et disposés comme spécifié ci-dessus, mais ayant des champs de vue au moins approximativement disjoints, grâce à quoi un seul rétroréflecteur intervient à la fois pour générer l'impulsion en retour.

En fait, des coins de cube non symétriques existaient déjà avant l'invention, mais dans des domaines techniques différents et pour des fonctions différentes de ceux de l'invention.

En fait, les inventeurs connaissent deux catégories de coins de cube non symétriques.

Dans une première catégorie peuvent être regroupés des cubes à angles réglables ; des exemples en sont décrits dans les documents US-4.319.804 et US-4.589.740. Une possibilité de réglage y est prévue pour permettre un contrôle à volonté de l'orientation du faisceau réfléchi, afin, par exemple, qu'il soit aligné avec un récepteur décalé angulairement de façon sensible, par rapport aux coins de cube, vis à vis de l'émetteur (document US-4.589.740) ; on peut aussi vouloir pouvoir moduler au cours du temps l'intensité du signal reçu (messages, codage .... - voir le document US-4.589.740), ou encore compenser l'effet de l'environnement (fluctuations de températures (document US-4.319.804) ). L'émetteur et le récepteur sont fixes par rapport à la cible.

Le document US-3.936.194 concerne la vérification et l'optimisation du réglage de tels coins de cube ajustables.

Dans une autre catégorie, on peut regrouper des coins de cube multiples destinés à des fonctions de marquage, notamment routier (panneaux, poteaux, "lignes blanches" ...) grâce à la mise en oeuvre d'un réseau ou mosaïque d'un grand nombre de très petits rétroréflecteurs (parfois de multiples empreintes en coin dans une feuille plastique) pour renvoyer un faisceau incident, en pratique celui des phares d'un véhicule, vers le chauffeur. Une altération systématique de l'orthogonalité des angles (voir US-3.833.285 (altération d'une des trois arêtes d'une minorité de coins dans une mosaïque de petits rétroflecteurs), ou US-3.923.378), ou l'introduction de stries sur les faces des coins (document US-4.775.219) permet de garantir qu'une partie du faisceau renvoyé est reçue par les yeux du conducteur (et pas seulement vers les phares). Dans cette deuxième catégorie, si l'ensemble émetteur/récepteur bouge par rapport aux rétroréflecteurs, ce mouvement a une composante transverse très faible.

Mais aucun de ces documents n'envisage des coins de cube présentant, un écart à l'orthogonalité pour un seul de ses angles en vue de corriger un quelconque effet d'aberration de vitesse (dont il a été précisé ci-dessus qu'il n'apparaît de façon significative qu'à des vitesses relatives transverses supérieures à 1 km/sec environ) en donnant à ces coins de cube une orientation propre à concentrer un maximum d'énergie rétroréfléchie dans une direction précise vers un récepteur lointain unique.

On appréciera que le fait que, selon l'invention, le coin de cube renvoie le faisceau avec deux lobes de diffraction décalés sensiblement parallèlement à la vitesse relative transverse et disposés symétriquement par rapport à la direction de l'impulsion incidente, évite d'avoir à prendre en compte le sens de cette vitesse relative transverse. Cela est particulièrement intéressant par exemple dans le cas où la cible et/ou l'émetteur/récepteur sont respectivement sur Terre et sur un véhicule spatial en orbite polaire, auquel cas le mouvement relatif, du fait de l'orbite du véhicule spatial, est parfois orienté sensiblement NORD-SUD, et d'autres fois orienté sensiblement SUD-NORD.

L'invention s'applique notamment, dans le cas d'un satellite en orbite autour de la Terre (ou d'une autre planète), et où la cible rétroréflectrice est sur Terre tandis que l'émetteur/récepteur est embarqué sur le satellite. Cela permet, grâce à une multiplication des cibles sur Terre (les cibles sont des éléments passifs donc en pratique moins coûteux que des éléments actifs tels que les émetteurs et les récepteurs) d'obtenir une bonne couverture terrestre par un seul satellite.

Notamment pour ce cas d'orbite polaire, mais cela peut se généraliser à d'autres types d'orbites, lorsque l'on souhaite un grand champ pour la cible rétroréflectrice, supérieur à celui d'un coin de cube seul, l'invention propose que, de préférence, la cible comporte une pluralité de rétroréflecteurs du type précité, de champs de vue ayant pas ou peu de recouvrement. De tels champs de vue quasi-disjoints (voir ci-dessus) ont pour intérêt d'éviter que pour certaines positions du satellite l'émetteur/récepteur reçoive des impulsions en retour de plusieurs coins de cube, avec des énergies du même ordre de grandeur, ce qui, soit empêcherait les mesures, soit nécessiterait une complexification de la chaîne d'analyse électronique associée à l'émetteur/récepteur pour permettre une déconvolution des signaux des divers coins de cube ; en pratique il est préféré de prévoir entre un et deux coins par stéradian du champ de vue à couvrir par la cible dans son ensemble.

De manière avantageuse, en cas de cible à plusieurs rétroréflecteurs, l'un de ces rétroréflecteurs est orienté en sorte que son axe soit parallèle à la verticale locale (pointé vers le Zénith) autour duquel les autres rétroréflecteurs sont de préférence distribués angulairement de façon régulière. De façon avantageuse l'inclinaison de l'axe de ces coins de cube par rapport à l'axe du coin de cube central est comprise entre 40° et 65° (par exemple 45°-50°), de préférence voisine de 50°. De manière préférée les divers coins de cube latéraux ont une même inclinaison par rapport au coin de cube central.

Selon une structure préférée de la cible, celle-ci comporte un coin de cube central et quatre coins de cubes latéraux régulièrement distribués autour de ce coin de cube central.

De manière préférée, ces coins de cubes latéraux sont orientés selon une configuration symétrique par rapport à la direction locale moyenne de la projection au sol des tronçons d'orbite interceptés par le champ de vue global de la cible.

Dans le cas d'une orbite polaire, ces quatre coins de cube sont ainsi typiquement orientés sauf à l'approche des cercles polaires respectivement vers le NORD, le SUD, l'EST et l'OUEST ou, selon une autre disposition symétrique par rapport à la direction NORD-SUD, vers le NORD-EST, le NORD-OUEST, le SUD-EST et le SUD-OUEST, avec les arêtes présentant l'écart à l'orthogonalité déterminant toutes, avec les normales des coins de cube auxquels elles appartiennent, des plans interceptant un plan horizontal local selon des directions au moins approximativement parallèles à la direction EST-OUEST.

Des objets, caractéristiques et avantages de l'invention ressortent de la description qui suit, donnée à titre d'exemple non limitatif, en regard des dessins annexés sur lesquels :

- la figure 1 est une vue en perspective d'un coin de cube selon l'invention,

- la figure 2 est une cible rétroréflectrice à plusieurs rétroréflecteurs conformes à la figure 1, en vue de dessus,

- la figure 3 est une vue de côté, et

- la figure 4 est une vue de principe de la mise en oeuvre de la cible des figures 2 et 3, en coopération avec un émetteur/récepteur embarqué sur un satellite décrivant une orbite polaire.

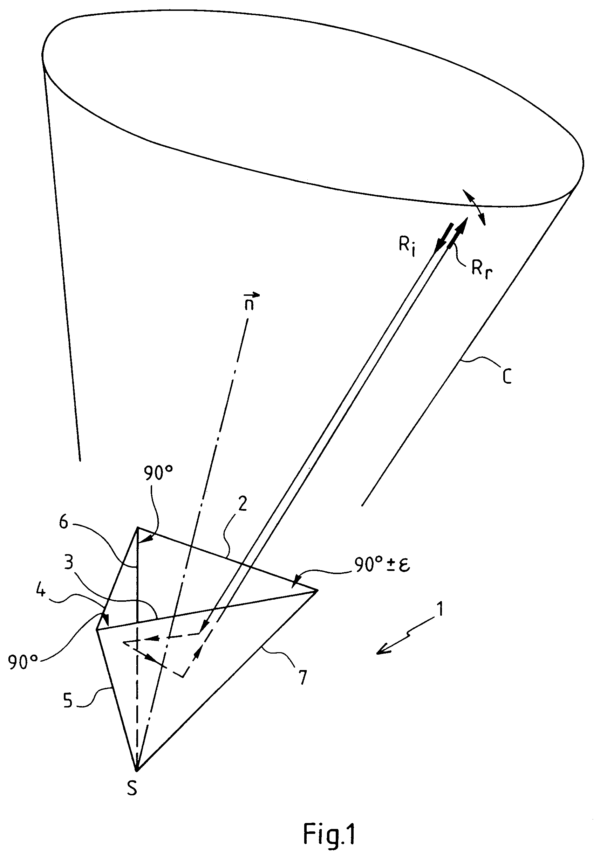

La figure 1 représente un rétroréflecteur 1 en coin de cube conforme à l'invention. Il comporte trois facettes planes réfléchissantes 2, 3 et 4 déterminant trois arêtes 5, 6 et 7 convergentes en un sommet S. Les deux facettes 2 et 3 sont orthogonales à la troisième facette 4 tout en faisant entre elles un angle faisant un écart $\varepsilon$ à l'orthogonalité, en pratique de l'ordre de 1 à 10 secondes d'arc. On appelle l'arête 7 : arête corrigée.

Le coin de cube 1 est ici creux mais peut, en variante non représentée, être une portion massive de cube en un matériau transparent à la longueur d'onde choisie pour les impulsions laser (voir ci-dessous).

On appelle normale du coin de cube $\bar{n}$ la direction faisant un angle égal avec les trois arêtes 5 à 7. Le champ de vue du rétroréflecteur est approximativement un cône de demi-angle égal à 30°.

La dimension transversale moyenne mesurée à la sortie du rétroréflecteur est appelée diamètre.

Un rayon Ri incident est renvoyé après reflexion sur les trois faces, en un rayon en retour qui lui est sensiblement parallèle.

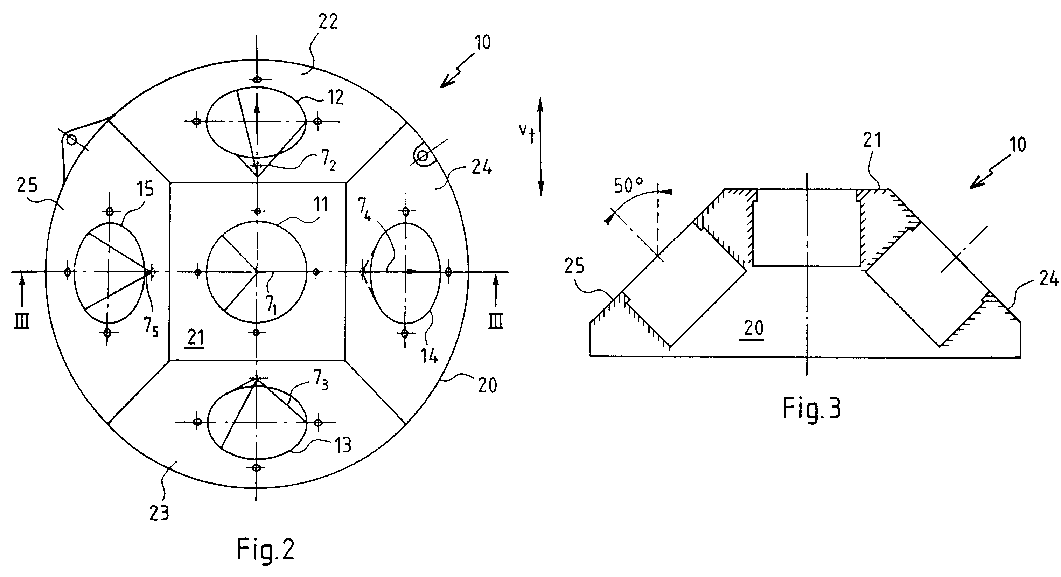

Les figures 2 et 3 représentent une cible rétroréflectrice 10, adaptée à être mise sur le sol (selon une orientation précise ci-dessous). Cette cible comporte cinq rétroréflecteurs 11 à 15 tous conformes au rétroréflecteur 1 de la figure 1.

Dans cette cible 10 proposée à titre d'exemple, l'un des rétroréflecteur 11 a une position centrale avec sa normale parallèle à la verticale locale tandis que les quatre autres rétroréflecteurs 12 à 15 sont répartis autour de ce rétroréflecteur central, ici de façon symétrique et avec des normales présentant des inclinaisons égales par rapport à la normale du rétroréflecteur, ici égales à 50°.

Les rétroréflecteurs sont positionnés dans un socle 20 de base circulaire et présentant une face supérieure horizontale 21, dans laquelle est engagé le rétroréflecteur central ainsi que quatre faces 22 à 25 inclinées à 50° pour les rétroréflecteurs latéraux.

Ces rétroréflecteurs sont positionnés en sorte que leurs arêtes corrigées $7_1$, $7_2$, $7_3$, $7_4$ et $7_5$ déterminent avec les normales des coins de cube auxquels elles appartiennent des plans interceptant un plan horizontal local selon des directions au moins approximativement parallèles à une direction caractéristique de la cible.

Les champs de vue de ces rétroréflecteurs sont sensiblement disjoints.

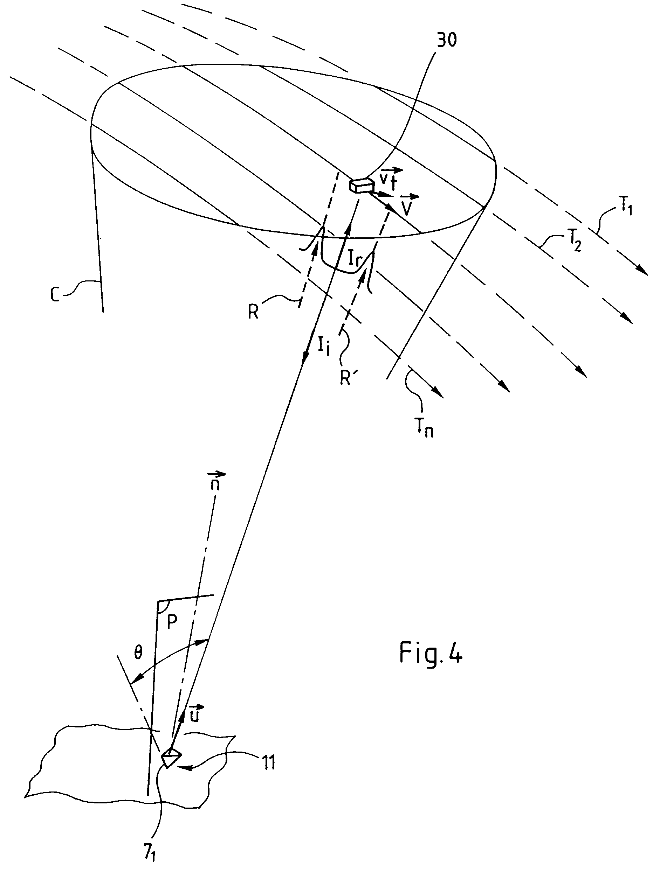

La figure 4 présente un rétroréflecteur unique, ici le rétroréflecteur central 11 de la cible des figures 2 et 3 ; sa normale est notée $\bar{n}$ et son champ de vue est schématisé par le cône C.

Ce champ de vue intercepte la trajectoire relative d'un ensemble émetteur/récepteur 30 en plusieurs tronçons $T_1$, $T_2$, ...$T_n$. Les vitesses respectives moyennes pour ces divers tronçons sont approximativement parallèles. Ces tronçons sont en pratique l'intersection du champ de vue avec les orbites successives d'un satellite portant l'émetteur/récepteur 30 et ayant une vitesse $v_t$ mesurée transversalement à la ligne 11-30, d'au moins 1 km/sec. environ. Cet émetteur/récepteur est de tout type connu approprié. Il est adapté à émettre une impulsion laser $I_i$ vers la cible et à recevoir une impulsion $I_R$ renvoyée par cette cible.

Le rétroréflecteur est disposé en sorte que le plan P passant par l'arête corrigée et la normale n est sensiblement perpendiculaire à l'orientation moyenne de la vitesse transverse de l'émetteur/récepteur sur ses tronçons de trajectoires (en pratique à quelques degrés près).

La valeur de l'écart d'angle $\underline{\varepsilon}$ associé à cette arête corrigée est comprise entre les valeurs minimale et maximale que prend la grandeur $v_t/(c.\sin\Theta)$ en radians pour diverses valeurs des tronçons de trajectoires, où $v_t$ est la vitesse relative transverse instantanée, $\Theta$ l'angle instantané entre la direction 11-30 et l'arête corrigée, et $\underline{c}$ est la vitesse de la lumière.

Du fait de la présence d'un écart $\underline{\varepsilon}$ non nul, l'impulsion en retour présente un maximum d'énergie selon deux directions R et R' légèrement décalées symétriquement de part et d'autre à la direction de l'impulsion $I_i$ au moins approximativement parallèlement à la trajectoire. En fait ces décalages, en pratique de l'ordre de quelques secondes d'arc, ont été exagérés sur la figure 4 pour des raisons de clarté.

Compte-tenu de la valeur importante de la vitesse transverse $v_t$, l'émetteur/récepteur 30 s'est écarté sensiblement de la direction de l'impulsion $I_1$ lorsque l'impulsion $I_R$ revient. La valeur de $\underline{\varepsilon}$, lorsqu'elle est choisie entre les valeurs minimale et maximale précitées, implique que l'une des directions R et R' d'énergie maximale intercepte l'émetteur/récepteur de sorte que ce dernier reçoive une énergie significative malgré sa vitesse transverse.

En fait, l'orientation du rétroréflecteur autour de sa normale et la valeur de $\underline{\varepsilon}$ sont choisies en sorte d'optimiser l'énergie reçue pour les diverses directions depuis lesquelles l'émetteur/récepteur est susceptible d'émettre une impulsion vers la cible. Les conditions indiquées ci-dessus tiennent compte de ce que en pratique ces positions d'émission sont distribuées de façon homogène dans le champ de vue.

On appréciera que c'est la vitesse relative entre les deux objets que constituent la cible et l'émetteur/récepteur, dans une direction perpendiculaire à la ligne qui les rejoindrait, qui contribue à l'aberration angulaire de vitesse. Il s'agit donc, dans le cas général, de la projection d'une vitesse dans une direction donnée, cette projection étant fonction de la géométrie des deux objets précités au moment considéré. Ainsi, un satellite en orbite géostationnaire observé au zénith par quelqu'un sur Terre aura une aberration angulaire de vitesse maximale de 4,1 sec.arc. Si l'observateur se trouve ailleurs sur Terre, tel que sa ligne de visée fait un angle par rapport au nadir du satellite, l'aberration de vitesse apparente sera inférieure à 4,1 sec.

Ainsi, pour un scénario donné, l'aberration de vitesse apparente varie avec les variations de ligne de visée. La projection de cette vitesse sur un plan de référence au niveau de l'observateur se fait dans une direction qui varie également avec les variations de ligne de visée.

Si l'on considère que l'observateur est un rétroréflecteur qui a pour rôle de tenir compte de ces différents vecteurs d'aberration de vitesse, on constate que pour un champ de vue raisonnable (un cône de demi-angle 20°-30°) le jeu des vecteurs à considérer est peu dispersé. Il est ensuite raisonnable, comme cela a été exposé ci-dessus, d'appliquer une compensation unique, pour le champ de vue en question, afin d'obtenir une correction de l'observation de vitesse optimisée.

Par rapport à la solution omnidirectionnelle de l'art antérieur, cette approche permet une concentration optimale de l'énergie rétroréflectrice dans une direction privilégiée, celle optimisée pour un champ de vue déterminé du rétroréflecteur.

Il est cependant à noter que le champ d'aberration de vitesse à corriger peut, dans le cas d'une orbite "polaire", comporter deux ensembles différents d'optima pour l'orientation et l'ouverture des arêtes corrigées, correspondant aux passages "ascendant" et "descendant" du satellite qui se font dans deux directions symétriquement disposées de part et d'autre de la direction fictive "NORD-SUD". Dans ce cas on peut procéder soit à une optimisation des rétroréflecteurs pour une seule de ces directions, soit à un compromis qui optimise les effets moyens d'aberration de vitesse entre les deux directions.

Pour tous les cas pratiques de véhicule spatial ou Lune orbitant la Terre, l'angle d'écart $\underline{\varepsilon}$ se trouvera dans la fourchette $0,8" \leq \underline{\varepsilon} \leq 8"$.

Les angles $\delta$ des facettes pour les autres arêtes doivent se trouver, approximativement, dans la fourchette $90° \pm 1"$. Dans le cas d'un rétroréflecteur pour la Lune, avec $\varepsilon \approx 0,8"$, il vaut mieux imposer plutôt $-0,2.\varepsilon \leq (\delta-90°) \leq +0,7.\varepsilon$.

Le contrôle de ces angles peut se faire par interférométrie : on fait interférer l'onde rétroréflectrice avec une onde de référence, donnant lieu à trois jeux de franges dont les séparations et inclinaisons traduisent les écarts de direction introduits. On arrive à des précisions de l'ordre de quelques dixièmes de secondes d'arc, selon le diamètre du rétroréflecteur et la qualité de l'interféromètre.

Divers exemples de configuration selon l'invention sont présentés ci-dessous :

Satellite polaire autour de la Terre :

- vitesse relative ~5 à 8 km/sec

- aberration de vitesse angulaire 6,9" à 11"arc

- défaut de perpendicularité sur une des facettes 4,2" à 6,8"

- cible(s) à rétroréflecteurs au sol.

Satellite géostationnaire autour de la Terre :

- vitesse relative 3 km/sec

- aberration de vitesse angulaire 4,1"arc

- défaut de perpendicularité sur une des facettes 2,5"

- cible(s) à rétroréflecteurs au sol.

Lune-Terre :

- vitesse relative 1 km/sec

- aberration de vitesse angulaire 1,4"arc

- défaut de perpendicularité sur une des facettes 0,8"

Satellite-Lune ou planète :

- vitesse relative selon l'orbite > 1km/sec

- aberration de vitesse supérieure à 1,4"arc

- défaut de perpendicularité sur une des facettes supérieure à 0,8"

- cible(s) à rétroréflecteurs sur Lune ou planète.

Dans les exemples précités on peut bien sûr prévoir en variante que la cible soit plutôt sur le satellite, avec un ou plusieurs émetteur(s)-récepteur(s) au sol (parfois appelés "stations laser"). Pour de plus amples renseignements sur ce type de configuration on peut par exemple se référer aux comptes-rendus des conférences "International Workshop on Laser Ranging Instrumentation".

L'invention peut ainsi notamment être mise en oeuvre sur un satellite stabilisé 3-axes, tel que celui connu sous la référence ERS-1 (800 km d'altitude et 98° d'inclinaison). Il suffit alors de prévoir sur ce satellite un coin de cube tel que le plan P défini ci-dessus soit sensiblement perpendiculaire à la trajectoire relative des stations laser au sol par rapport au satellite, c'est-à-dire en pratique perpendiculaire au plan de l'orbite.

Pour ce qui est de la télémétrie Terre-Lune il est rappelé que des panneaux à rétroréflecteurs ont été déposés sur la Lune lors de missions LUNAKHOD et APPOLO et que l'invention pourrait aisément être mise en oeuvre dans la conception de cibles destinées à être mises en place lors de futures missions.

A titre d'exemple de dimensionnement, le socle de la cible des figures 2 et 3 a à sa base un diamètre d'environ 780 mm, une hauteur de 300 mm, des logements de diamètres d'environ 90 mm (correspondant au "diamètre" des rétroréflecteurs). Il va de soi que la description qui précède n'a été proposée qu'à titre d'exemple non limitatif et que de nombreuses variantes peuvent être proposées par l'homme de l'art sans sortir du cadre de l'invention.

**Revendications**

1. Dispositif de télémétrie par laser à grande distance comportant un ensemble émetteur/récepteur (30) adapté à émettre et recevoir une impulsion laser et une cible rétroréflectrice (10) adaptée à recevoir cette impulsion laser et la renvoyer parallèlement à elle-même, cet ensemble émetteur/récepteur décrivant par rapport à la cible une trajectoire relative en des points de laquelle cet ensemble a une vitesse relative globale V et, perpendiculairement à une ligne instantanée ($\bar{u}$) le reliant à la cible, une vitesse relative transverse $v_t$ qui est en moyenne de l'ordre au moins du km/sec, caractérisé en ce que cette cible comporte au moins un rétroréflecteur (1, 11, 12, 13, 14, 15) en forme de coin de cube dont le champ de vue (C) intercepte ladite trajectoire en au moins un tronçon (T1 ... Tn) et qui comporte trois facettes planes réfléchissantes (2, 3, 4) déterminant trois arêtes (5, 6, 7) convergentes en un sommet, dont deux facettes (2, 3) sont orthogonales à la troisième (4) tout en formant entre elles un angle différant de 90° d'une valeur d'écart $\underline{\varepsilon}$ au moins égale à une seconde d'arc, ces dites facettes convergeant en une arête (7, $7_1$, $7_2$, $7_3$, $7_4$, $7_5$), dite "arête corrigée" et contenue dans un plan (P) passant par l'axe ($\bar{n}$) du coin de cube et au moins approximativement perpendiculaire à l'orientation moyenne de la vitesse relative transverse en ce ou ces tronçons de trajectoire, l'écart $\underline{\varepsilon}$ étant compris entre les valeurs minimale et maximale de la grandeur $v_t/(c.\sin\theta)$, en radians, sur le (ou les) tronçon(s) de trajectoire interceptés par ledit champ de vue du rétroréflecteur, où $v_t$ et $\theta$ sont respectivement, pour un point quelconque de ce ou/ces tronçon(s), la vitesse relative transverse et l'angle entre la ligne reliant ce point à la cible et ladite arête corrigée, et où $\underline{c}$ est la vitesse de la lumière.

2. Dispositif de télémétrie par laser à grande distance selon la revendication 1, caractérisé en ce que la cible (10) comporte une pluralité de rétroréflecteurs (11, 15) de champs de vue au moins approximativement disjoints ayant chacun une seule arête ($7_1$-$7_5$) corrigée déterminant avec leurs normales des plans au moins approximativement perpendiculaires à l'orientation moyenne de la vitesse relative globale dans ces champs de vue, respectivement.

3. Dispositif de télémétrie par laser à grande distance selon la revendication 1 ou 2, caractérisé en ce qu'elle comporte un élément sur Terre portant la cible et un satellite en orbite autour de la Terre sur lequel l'émetteur/récepteur (30) est embarqué.

4. Dispositif de télémétrie par laser à grande distance selon la revendication 3, caractérisé en ce que ledit satellite décrit des orbites au moins approximativement polaires.

5. Dispositif de télémétrie par laser à grande distance selon la revendication 3 ou la revendication 4, caractérisé en ce que la cible (10) est sur Terre et comporte plusieurs rétroréflecteurs dont l'un central (11) est orienté parallèlement à la verticale et les autres (12-15) sont distribués angulairement de façon régulière autour de ce rétroréflecteur central, les arêtes corrigées ($7_1$-$7_5$)des rétroréflecteurs déterminant avec les normales de ceux-ci des plans interceptant un plan horizontal local selon des droites parallèles.

6. Dispositif de télémétrie par laser à grande distance selon la revendication 5, caractérisé en ce que les normales de ces autres rétroréflecteurs ont des inclinaisons comprises entre 40 et 65° par rapport à la normale du rétroréflecteur central.

7. Dispositif de télémétrie par laser à grande distance selon la revendication 6, caractérisé en ce que ces inclinaisons sont égales.

8. Dispositif de télémétrie par laser à grande distance selon l'une quelconque des revendications 5 à 7, caractérisé en ce que ces inclinaisons sont voisines de 45-50°.

9. Dispositif de télémétrie par laser à grande distance selon les revendications 5 à 8, caractérisé en ce que lesdits autres rétroéflecteurs (12-15) sont au nombre de quatre.

10. Dispositif de télémétrie par laser à grande distance selon l'une quelconque des revendications 5 à 9, caractérisé en ce que, l'émetteur/récepteur décrivant des orbites sensiblement polaires, ces coins de cubes latéraux sont orientés selon une configuration symétrique par rapport à la direction locale moyenne de la projection au sol des tronçons d'orbite interceptés par le champ de vue global de la cible.

**Patentansprüche**

1. Laser-Telemetriervorrichtung für große Entfernungen, die eine Sende-/Empfangseinheit (30), die dafür ausgelegt ist, einen Laserimpuls zu senden und zu empfangen, und eine rückreflektierende Zielplatte (10) aufweist, die dafür ausgelegt ist, diesen Laserimpuls zu empfangen und ihn parallel zu ihm selbst zurückzuschicken, wobei diese Sende-/Empfangseinheit in bezug auf diese Zielplatte eine Trajektorie beschreibt, relativ zu Punkten derselben diese Einheit eine Gesamtrelativgeschwindigkeit V und, senkrecht zu einer momentanen Linie ($\bar{u}$) die jene mit der Zielplatte verbindet, eine transversale Relativgeschwindigkeit $v_t$ hat, die im Mittel von der Größenordnung von mindestens km/sec ist, dadurch gekennzeichnet, daß diese Zielplatte mindestens einen Rückreflektor (1, 11, 12, 13, 14, 15) in Form eines Würfelkeils aufweist, dessen Gesichtsfeld (C) besagte Trajektorie auf mindestens einem Abschnitt (T1 ... Tn) unterbricht und der drei plane, reflektierende Flächen (2, 3, 4) aufweist, die drei in einer Spitze zusammenlaufende Kanten (5, 6, 7) bestimmen und von denen zwei Flächen (2, 3) orthogonal zu der dritten (4) sind, wobei sie insgesamt zueinander einen Winkel bilden, der sich von 90° um einen Abweichungswert $\underline{\varepsilon}$ unterscheidet, der mindestens gleich einer Winkelsekunde ist, wobei diese besagten Flächen in einer Kante (7, $7_1$, $7_2$, $7_3$, $7_4$, $7_5$) zusammenlaufen, die "korrigierte Kante" genannt wird und in einer Ebene (P) enthalten ist, die durch die Achse ($\bar{n}$) des Würfelkeils und wenigstens näherungsweise senkrecht zur mittleren Orientierung der transversalen Relativgeschwindigkeit auf diesem Trajektorienabschnitt oder diesen Trajektorienabschnitten verläuft, wobei die Abweichung $\underline{\varepsilon}$ Werte zwischen dem Minimalwert und dem Maximalwert der Größe $v_t/(c.sin\theta)$, in Radiant, auf dem (oder den) durch besagtes Gesichtsfeld des Rückreflektors unterbrochenen Trajektorienabschnitt(en) umfaßt, wobei $v_t$ und $\theta$ jeweils für einen beliebigen Punkt dieses oder/dieser Abschnitte(s) die transversale Relativgeschwindigkeit und der Winkel zwischen der diesen Punkt mit der Zielplatte verbindenden Linie und besagter korrigierter Kante sind und wobei $\underline{c}$ die Lichtgeschwindigkeit ist.

2. Laser-Telemetriervorrichtung für große Entfernungen nach Anspruch 1, dadurch gekennzeichnet, daß die Zielplatte (10) eine Mehrzahl von Rückreflektoren (11, 15) von wenigstens näherungsweise getrennten Gesichtsfeldern aufweist, von denen jeder eine einzelne korrigierte Kante ($7_1$-$7_5$) hat, die jeweils mit ihren Normalen Ebenen bestimmen, die wenigstens näherungsweise senkrecht zur mittleren Orientierung der Gesamtrelativgeschwindigkeit in diesen Gesichtsfeldern sind.

3. Laser-Telemetriervorrichtung für große Entfernungen nach Anspruch 1 oder 2, dadurch gekennzeichnet, daß sie ein die Zielplatte tragendes Element auf der Erde und einen Satelliten im Orbit um die Erde aufweist, auf dem der Sender/Empfänger (30) geladen ist.

4. Laser-Telemetriervorrichtung für große Entfernungen nach Anspruch 3, dadurch gekennzeichnet, daß besagter Satellit wenigstens näherungsweise polare Orbits beschreibt.

5. Laser-Telemetriervorrichtung für große Entfernungen nach Anspruch 3 oder Anspruch 4, dadurch gekennzeichnet, daß die Zielplatte (10) auf der Erde ist und mehrere Rückreflektoren aufweist, von denen ein zentraler (11) parallel zur Vertikalen orientiert ist und die anderen (12-15) auf regelmäßige Weise winkelförmig um diesen zentralen Rückreflektor verteilt sind, wobei die korrigierten Kanten ($7_1$-$7_5$) der Rückreflektoren mit den Normalen derselben Ebenen bestimmen, die eine lokale horizontale Ebene entlang paralleler Geraden unterbrechen.

6. Laser-Telemetriervorrichtung für große Entfernungen nach Anspruch 5, dadurch gekennzeichnet, daß die Normalen dieser anderen Rückreflektoren in bezug auf die Normale des zentralen Rückreflektors zwischen 40 und 65° gelegene Neigungen haben.

7. Laser-Telemetriervorrichtung für große Entfernungen nach Anspruch 6, dadurch gekennzeichnet, daß diese Neigungen gleich sind.

8. Laser-Telemetriervorrichtung für große Entfernungen nach Anspruch 6 oder 7, dadurch gekennzeichnet, daß diese Neigungen nahe 45-50° sind.

9. Laser-Telemetriervorrichtung für große Entfernungen nach einem der Ansprüche 5 bis 8, dadurch gekennzeichnet, daß besagte andere Rückreflektoren (12-15) vier an der Zahl sind.

10. Laser-Telemetriervorrichtung für große Entfernungen nach einem der Ansprüche 5 bis 9, dadurch gekennzeichnet, daß diese seitlichen Würfelkeile gemäß einer symmetrischen Konfiguration in bezug auf die mittlere lokale Richtung der Projektion der durch das gesamte Gesichtsfeld der Zielplatte unterbrochenen Orbitabschnitte auf die Sonne orientiert sind, wobei der Sender/Empfänger im wesentlichen polare Orbits beschreibt.

## Claims

1. A long range laser ranging device comprising a transmitter-receiver unit (30), adapted to transmit and receive a laser pulse, and a retroreflector target (10) adapted to receive this laser pulse and return it parallel to itself, this transmitter-receiver unit travelling, with respect to the target, along a relative path, in some points of which this unit has an overall relative velocity V and, normal to an instantaneous line ($\bar{u}$) joining it to the target, has a transverse relative velocity $v_t$, which, on the average, is of the order of at least 1 km/sec, characterized in that said target comprises at least one retroreflector (1, 11, 12, 13, 14, 15) having a cube corner shape, the field of view of which (C) intercepts said path in at least one portion (T1...Tn), and which includes three reflecting plane faces (2, 3, 4) defining three dihedral angles (5, 6, 7) converging towards an apex, among which two faces (2, 3) are normal to the third one (4) while forming between each other an angle differing by 90° from a deviation value $\underline{\varepsilon}$ at least equal to one arcsecond, said faces converging into a dihedral angle (7, $7_1$, $7_2$, $7_3$, $7_4$, $7_5$), referred to as the "corrected dihedral angle" and contained within a plane (P) passing through the axis ($\bar{n}$) of the cube corner and being at least approximately perpendicular to the average orientation of the transverse relative velocity in this or these path portion(s), wherein the deviation $\underline{\varepsilon}$ lies between the minimum and maximum values of the quantity $v_t/(c.sin\Theta)$, in radians, over the path portion(s) intercepted by the field of view of said retroreflector, where $v_t$ and $\Theta$ are, for any point in this or these portion(s), the transverse relative velocity and the angle formed by the line joining this point to the target, and said corrected dihedral angle, respectively, and where $c$ is the speed of light.

2. A long range laser ranging device according to claim 1, characterized in that the target (10) comprises a plurality of retroreflectors (11, 15) with at least approximately separate fields of view, each having a single corrected dihedral angle ($7_1$-$7_5$) defining with their normals, planes at least approximately normal to the average orientation of the overall relative velocity within said fields of view, respectively.

3. A long range laser ranging device according to claims 1 or 2, characterized in that the target (10) is on the Earth, while the transmitter/receiver (30) is carried by a satellite orbiting the Earth.

4. A long range laser ranging device according to claim 3, characterized in that said satellite travels along orbits which are at least approximately polar.

5. A long range laser ranging device according to claim 3 or claim 4, characterized in that the target (10) is on the Earth and comprises several retroreflectors among which a central one (11) is oriented parallel to the vertical and the others (12-15) have a uniform angular distribution around this central retroreflector, wherein the corrected dihedral angles ($7_1$-$7_5$) of the retroreflectors define, with their normals, planes intercepting a local horizontal plane along parallel straight lines.

6. A long range laser ranging device according to claim 5, characterized in that the normals of these other retroreflectors have tilt angles of 40 to 65° relative to the normal of the central retroreflector.

7. A long range laser ranging device according to claim 6, characterized in that said tilt angles are equal.

8. A long range laser ranging device according to any of claims 5 to 7, characterized in that said tilt angles are close to 45-50°.

9. A long range laser ranging device according to claims 5 to 8, characterized in that said other retroreflectors (12-15) are four in number.

10. A long range laser ranging device according to any of claims 5 to 9, characterized in that, while the transmitter/receiver travels along polar orbits, these lateral cube corners are oriented according to a symmetrical arrangement relative to the average local direction of the ground projection of orbit portions intercepted by the overall field of view of the target.

Fig.1

Fig.3

Fig.2

Fig. 4